# EUROPEAN PATENT APPLICATION

(11) **EP 4 613 683 A1**
(43) Date of publication of application: **10.09.2025**
(21) Application number: 25155989.4
(22) Date of filing: 05.02.2025
(51) Int. Cl.: B65H 1/14, B65H 7/02

(54) **DOCUMENT CONVEYING DEVICE AND IMAGE FORMING APPARATUS**

(30) Priority: 04.03.2024 JP 2024032503
(71) Applicant: KYOCERA Document Solutions Inc., Osaka-shi, Osaka, 540-8585 (JP)
(72) Inventor: KURAHASHI, Taro, Osaka-shi, Osaka, 540-8585 (JP)
(74) Representative: Herrero & Asociados, S.L.

(57) **Abstract**

A document conveying device (6) includes an operation device (470), a document loading tray (61), a document detection sensor (73), a document ejection tray (62), a feed roller (41), a document conveying mechanism (63), an elevating mechanism (64), and a controller (100). Upon passage of a first waiting time from when the document detection sensor (73) has detected any sheet of original document on the document loading tray (61), the controller (100) allows the elevating mechanism (64) to move the document loading tray (61) to a standby position between upper and lower limit positions and stop the tray at the standby position. Upon acceptance of an instruction to read original document through the operation device (470), the controller (100) allows the feed roller (41) to feed a sheet of original document on the document loading tray (61), allows the document conveying mechanism (63) to convey the fed sheet to a reading position, and allows the elevating mechanism (64) to move up the document loading tray (61) to the upper limit position.

## Description

### BACKGROUND

The present invention relates to document conveying devices capable of conveying sheets of original document to document reading devices and image forming apparatuses equipped with document conveying devices.

A document conveying device feeds sheets of original document on a document loading tray sheet by sheet with a feed roller and conveys the fed sheet to a reading position in a document reading device. For example, there is generally known a document conveying device that, upon acceptance of a user's instruction to read original document (an instruction to scan it or an instruction to copy it), moves up a document loading tray to a position (an upper limit position) at which the top surface of an uppermost one of sheets of the original document loaded on the document loading tray presses against the feed roller.

The document loading tray is moved down to a lower limit position and normally stays there. In order to start reading original document, it is necessary to move up the document loading tray over a long distance from the lower limit position to the upper limit position. For this reason, it takes long time to actually start reading the original document from the time of acceptance of an instruction to read the original document.

### SUMMARY

A technique improved over the aforementioned technique is proposed as one aspect of the present invention.

A document conveying device according to an aspect of the present invention includes an operation device, a document loading tray, a document detection sensor, a document ejection tray, a feed roller, a document conveying mechanism, an elevating mechanism, and a control device. The operation device accepts a user's instruction input thereto. The document loading tray receives sheets of original document loaded thereon. The document detection sensor detects presence or absence of any sheet of original document on the document loading tray. The feed roller is provided above the document loading tray and feeds the sheets of original document on the document loading tray sheet by sheet. The document conveying mechanism conveys the sheet of original document fed by the feed roller to a reading position of a document reading device and ejects the sheet of original document conveyed to the reading position to the document ejection tray. The elevating mechanism moves up and down the document loading tray between a predetermined lower limit position and an upper limit position at which a top surface of an uppermost one of the sheets of original document loaded on the document loading tray presses against the feed roller. The control device includes a processor and functions as a controller through the processor executing a control program. Upon passage of a predetermined first waiting time from when the document detection sensor has detected the presence of any sheet of original document on the document loading tray, the controller allows the elevating mechanism to move the document loading tray to a predetermined standby position located between the upper limit position and the lower limit position and stop the document loading tray at the standby position. Upon acceptance of an instruction to read the original document through the operation device, the controller allows the feed roller to feed the sheet of original document on the document loading tray, allows the document conveying mechanism to convey the sheet of original document fed by the feed roller to the reading position, and allows the elevating mechanism to move up the document loading tray to the upper limit position.

An image forming apparatus according to another aspect of the present invention includes the above-described document conveying device, a document reading device, and an image forming device. The document reading device reads an image of a sheet of original document conveyed to a reading position. The image forming device forms the image on a recording medium.

### BRIEF DESCRIPTION OF THE DRAWINGS

FIG. 1 is a perspective view showing an appearance of an image forming apparatus including a document conveying device according to one embodiment of the present invention.
FIG. 2 is a perspective view showing another example of the document conveying device.
FIG. 3 is a view showing a cross section of the document conveying device.
FIG. 4 is a view schematically showing the cross section of the document conveying device.
FIG. 5A is a view showing a state where a document loading tray has moved up to an upper limit position.
FIG. 5B is a view showing a state where the document loading tray has moved down to a lower limit position.
FIG. 6 is a functional block diagram schematically showing an essential internal configuration of the image forming apparatus.
FIG. 7A is a view showing a state where the document loading tray stands by at a standby position.
FIG. 7B is a view showing an intermediate position.
FIGS. 8 to 10 are a flowchart showing an example of up-and-down movement control processing of the document loading tray of the document conveying device.

### DETAILED DESCRIPTION

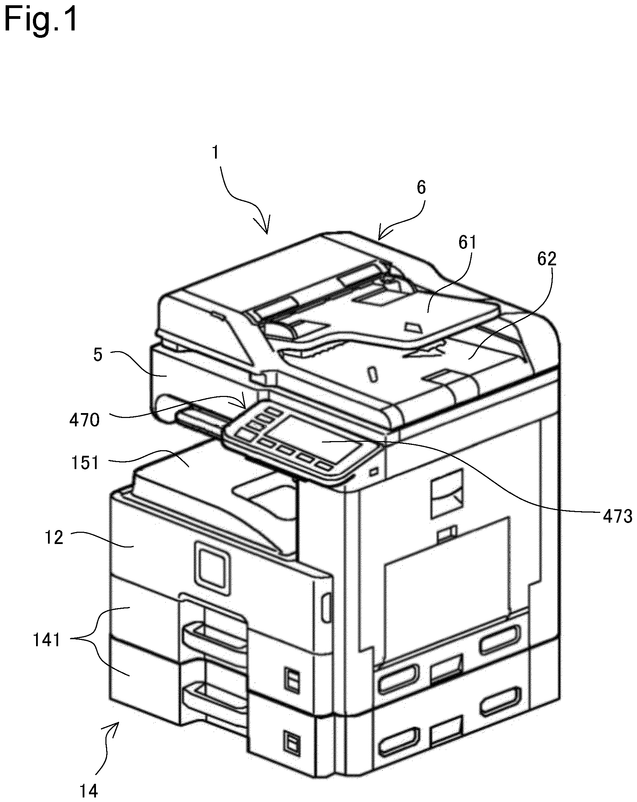

Hereinafter, a description will be given of a document conveying device and an image forming apparatus according to one embodiment of the present invention with reference to the drawings. FIG. 1 is a perspective view showing an appearance of an image forming apparatus 1 including a document conveying device 6 according to one embodiment of the present invention.

The image forming apparatus 1 is, for example, a multifunction peripheral combining multiple functions, such as a copy function, a print function, a scan function, and a facsimile function. The image forming apparatus 1 includes a document conveying device 6, a document reading device 5, an image forming device 12, a sheet feed device 14, and an operation device 470.

The document conveying device 6 is mounted by hinges or the like on the top surface of the document reading device 5 and is thus openable and closable relative to the document reading device 5. The document conveying device 6 functions as a document holding cover when the document reading device 5 reads a sheet of original document placed on a platen glass. The document conveying device 6 includes: an upwardly and downwardly movable document loading tray 61 on which sheets of original document are to be loaded; and a document ejection tray 62 provided below the document loading tray 61. The document conveying device 6 feeds the sheets of original document on the document loading tray 61 to the document reading device 5 sheet by sheet and then ejects the sheet of original document to the document ejection tray 62.

The document reading device 5 includes a scanner or the like. The document reading device 5 reads a sheet of original document being fed from the document conveying device 6 or reads a sheet of original document placed on the platen glass. The document reading device 5 can sequentially read the images of a plurality of sheets of original document being fed from the document conveying device 6.

First, a description will be given of the case where a document reading operation is performed on the image forming apparatus 1. The document reading device 5 optically reads an image of a sheet of original document fed to the document reading device 5 by the document conveying device 6 or an image of a sheet of original document placed on the platen glass and generates image data representing the read image. The image data generated by the document reading device 5 is saved in an image memory or the like.

Next, a description will be given of the case where an image forming operation is performed on the image forming apparatus 1. The image forming device 12 includes, for each color, a photosensitive drum, a charging device, an exposure device, a developing device, and a primary transfer device. The image forming device 12 includes a mechanism that forms an image on a recording paper sheet as a recording medium by secondary transfer via an intermediate transfer belt.

Based on image data generated by the document reading operation, image data stored in the image memory or the like, image data received from a computer connected via a network or another image data, the image forming device 12 forms a toner image on a recording paper sheet being fed from the sheet feed device 14, thus creating a printed sheet.

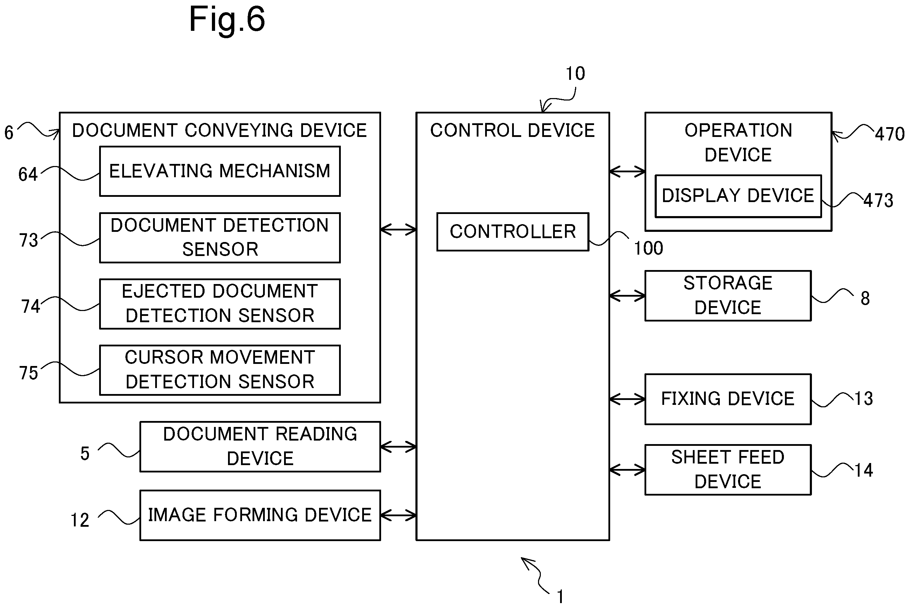

The recording paper sheet with the toner image formed thereon by the image forming device 12 is subjected to fixation processing in a fixing device 13 (see FIG. 6) to be described hereinafter. The recording paper sheet subjected to the fixation processing is ejected onto a sheet output tray 151.

The sheet feed device 14 includes a plurality of sheet feed cassettes 141. The sheet feed device 14 further includes a pick-up roller, a conveyance roller, a conveyance path, and rotary drive mechanisms for the rollers. The pick-up roller picks up a recording paper sheet from the sheet feed cassette 141 and feeds it to the image forming device 12.

The operation device 470 includes various hard keys to be operated by a user. The operation device 470 accepts, in response to operations on the hard keys, user's instructions for various types of operations and processing executable by the image forming apparatus 1, such as an instruction to execute an image forming operation. For example, the operation device 470 accepts an instruction to read original document (an instruction to scan it or an instruction of copy it).

The operation device 470 includes a display device 473 that displays operation guidance and other types of information for the user. The operation device 470 accepts, through a touch panel provided on the display device 473, an input of a user's instruction based on a user's gesture (a touch gesture) on a screen being displayed on the display device 473.

The display device 473 includes a liquid crystal display (LCD) or the like. When the user makes a touch gesture on a button or key being displayed on the screen, the touch panel accepts an instruction associated with a point where the touch gesture has been made. In this case, the touch panel functions as the operation device.

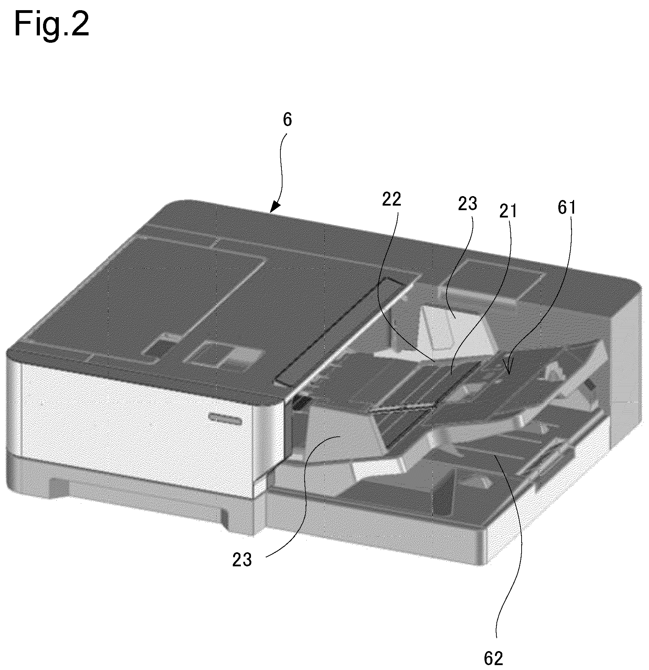

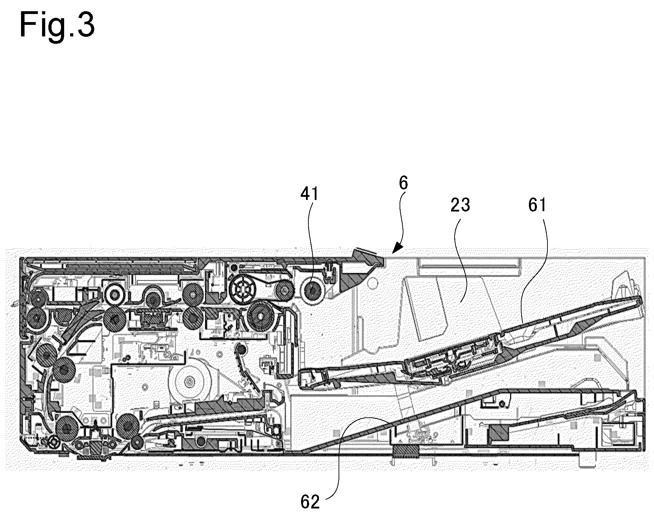

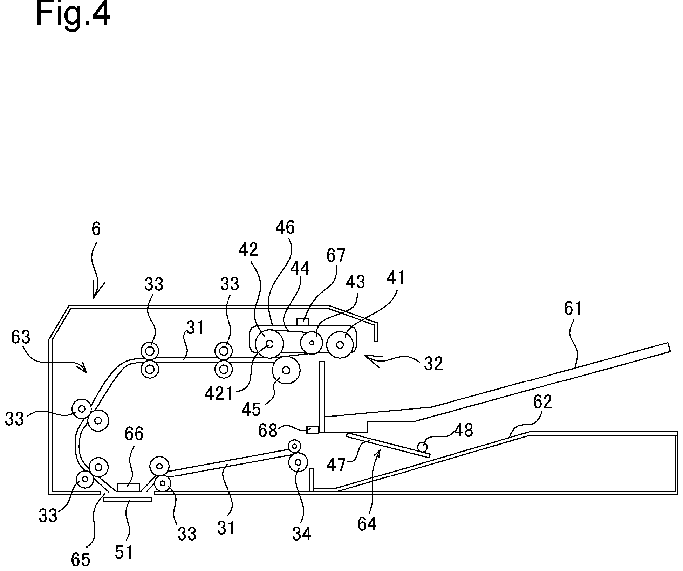

FIG. 2 is a perspective view showing another example of the document conveying device 6. FIG. 3 is a view showing a cross section of the document conveying device 6 shown in FIG. 2. FIG. 4 is a view schematically showing the cross section of the document conveying device 6.

The document conveying device 6 includes a document loading tray 61, a document ejection tray 62, a document conveying mechanism 63 (see FIG. 4), and an elevating mechanism 64 (see FIG. 4). The document conveying mechanism 63 conveys a sheet of original document loaded on the document loading tray 61 to the document ejection tray 62. The elevating mechanism 64 moves up and down the document loading tray 61. Control of up-and-down movement of the document loading tray 61 of the document conveying device 6 and drive control of components for reading a sheet of original document are performed by a controller 100 to be described hereinafter.

The document loading tray 61 includes a document loading table 21 (see FIG. 2), a cursor 22 (see FIG. 2), and a document width guide 23. The document loading table 21 receives sheets of original document loaded thereon. The cursor 22 is constructed on the top surface of the document loading table 21 slidably in a direction of width of a sheet of original document orthogonal to a direction of conveyance of the sheet of original document. The document width guide 23 stands upright from the cursor 22 and restricts the widthwise position of sheets of original document loaded on the document loading table 21 by abutting on the sheets of original document from the direction of width of the sheets.

The document conveying mechanism 63 includes a document conveyance path 31, a feed mechanism 32, a plurality of conveyance roller pairs 33, and an ejection roller pair 34. The feed mechanism 32 feeds sheets of original document on the document loading tray 61 sheet by sheet. The plurality of conveyance roller pairs 33 are arranged along the document conveyance path 31. The ejection roller pair 34 ejects a sheet of original document to the document ejection tray 62.

An opening 65 is formed in a lowermost portion of the document conveyance path 31. Specifically, in the bottom surface of the document conveying device 6, the opening 65 is formed opposite to a platen glass 51 located at a reading position of the document reading device 5 (see FIG. 1). A white plate 66 for shading correction is provided just above the opening 65 (just above the platen glass 51).

A sheet of original document fed by the feed mechanism 32 and conveyed along the document conveyance path 31 is conveyed to the opening 65 in the bottom surface of the document conveying device 6 and the image of the sheet of original document is read by the document reading device 5 at the location of the opening 65.

The sheet of original document having passed through the opening 65 is conveyed toward the ejection roller pair 34 by the conveyance roller pair 33 located downstream of the opening 65 in the direction of conveyance and then ejected to the document ejection tray 62 by the ejection roller pair 34.

The feed mechanism 32 includes a feed roller 41, a drive roller 42, a driven roller 43, a belt 44, and an auxiliary roller 45. The feed roller 41 picks up and feeds forward the sheets of original document on the document loading tray 61 sheet by sheet. The belt 44 is mounted around the drive roller 42 and the driven roller 43. The auxiliary roller 45 is provided under the belt 44.

The feed roller 41, the drive roller 42, the driven roller 43, and the belt 44 are provided in the interior of an open-bottomed box-shaped holder 46. The holder 46 is rockable about a drive shaft 421 of the drive roller 42 and the drive force from the drive shaft 421 is transmitted through a transmission mechanism, such as gears, to the feed roller 41.

A pressure detection sensor 67 is provided on the top of the holder 46. The pressure detection sensor 67 detects that an appropriate load has acted between the top surface of an uppermost one of sheets of original document loaded on the document loading tray 61 and the feed roller 41. In other words, the pressure detection sensor 67 serves as an upper limit sensor capable of detecting that the document loading tray 61 has moved up to an upper limit position where the top surface of the uppermost sheet presses against the feed roller 41.

The document conveying device 6 further includes a lower limit sensor 68 comprising a mechanical or optical sensor capable of detecting a lower limit position of the document loading tray 61.

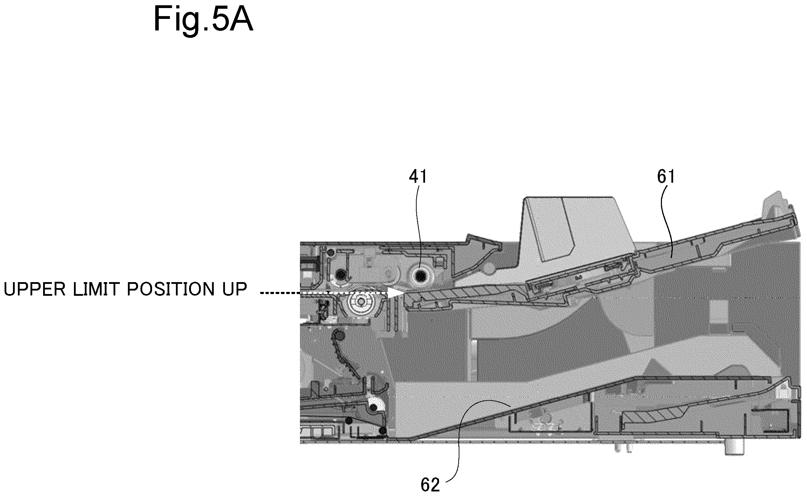

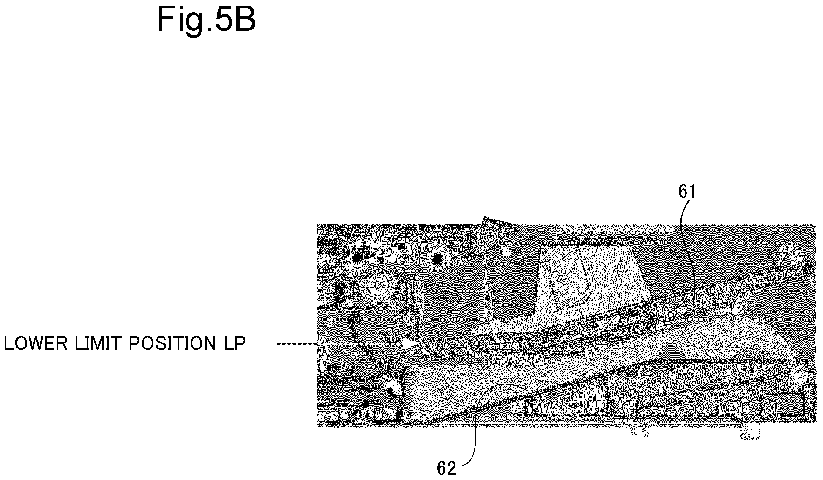

The elevating mechanism 64 includes an elevating lever 47 and a rotary shaft 48. The elevating lever 47 abuts at its distal end against the document loading tray 61 and moves up and down the document loading tray 61. The rotary shaft 48 is connected to a motor and pivotally moves the elevating lever 47 with the motor. FIG. 5A shows a state where the document loading tray 61 has moved up to an upper limit position UP. FIG. 5B shows a state where the document loading tray 61 has moved down to a lower limit position LP.

FIG. 6 is a functional block diagram schematically showing an essential internal configuration of the image forming apparatus 1. As shown in FIG. 6, the image forming apparatus 1 includes a control device 10, the document conveying device 6, the document reading device 5, the image forming device 12, the fixing device 13, the sheet feed device 14, the operation device 470, and a storage device 8.

The fixing device 13 is a fixing device including a heat roller, a pressure roller, and drive mechanisms that drive these rollers into rotation. The fixing device 13 applies, in a nip between both the rollers, heat and pressure to a recording paper sheet with a toner image formed thereon by the image forming device 12, thus fixing the toner image on the recording paper sheet. The recording paper sheet subjected to the fixation processing is ejected onto the sheet output tray 151 (see FIG. 1).

The storage device 8 is a large-capacity storage device, such as an HDD (hard disk drive) or an SSD (solid state drive). The storage device 8 stores various types of control programs.

The control device 10 includes a processor, a RAM (random access memory), a ROM (read only memory), and a dedicated hardware circuit. The processor is, for example, a CPU (central processing unit), an ASIC (application specific integrated circuit) or an MPU (micro processing unit).

When the processor of the control device 10 operates in accordance with a control program stored in the storage device 8, the control device 10 functions as the controller 100. However, the controller 100 may not be based on the operation of the control device 10 in accordance with the control program, but may be constituted by a hardware circuit. Hereinafter, the same applies to other embodiments unless otherwise stated.

The controller 100 governs the overall operation control of the image forming apparatus 1 and the document conveying device 6. The controller 100 is connected to the document conveying device 6, the document reading device 5, the image forming device 12, the fixing device 13, the sheet feed device 14, the operation device 470, and the storage device 8 and controls the drive and so on of these components. For example, the controller 100 executes various types of processing necessary for image formation of the image forming apparatus 1. The controller 100 is an example of the controller defined in CLAIMS.

The document conveying device 6 includes the elevating mechanism 64, a document detection sensor 73, an ejected document detection sensor 74, and a cursor movement detection sensor 75. The document detection sensor 73 is a sensor that detects whether any sheet of original document is present or absent on the document loading tray 61. The ejected document detection sensor 74 is a sensor that detects whether any sheet of original document is present or absent on the document ejection tray 62. The cursor movement detection sensor 75 is a sensor that detects movement of the cursor 22.

The document conveying device 6 may include the controller 100 as an example of the controller defined in CLAIMS. The controller 100 functions as a controller that governs the operation control of the components of the document conveying device 6.

Upon passage of a predetermined first waiting time T1 (for example, five seconds) from when the document detection sensor 73 has detected the presence of any sheet of original document on the document loading tray 61, the controller 100 controls the drive of the elevating mechanism 64 to move the document loading tray 61 to a predetermined standby position SP located between the upper limit position UP and the lower limit position LP and stop the document loading tray 61 at the standby position SP.

For example, when the controller 100 controls the drive of the elevating mechanism 64 to move up the document loading tray 61 and the pressure detection sensor 67 (see FIG. 4) detects that a load above a specified level has acted on the feed roller 41, the controller 100 determines that the document loading tray 61 has reached the upper limit position UP and stops further upward movement of the document loading tray 61. In other words, first, the controller 100 allows the document loading tray 61 to move up to the upper limit position UP.

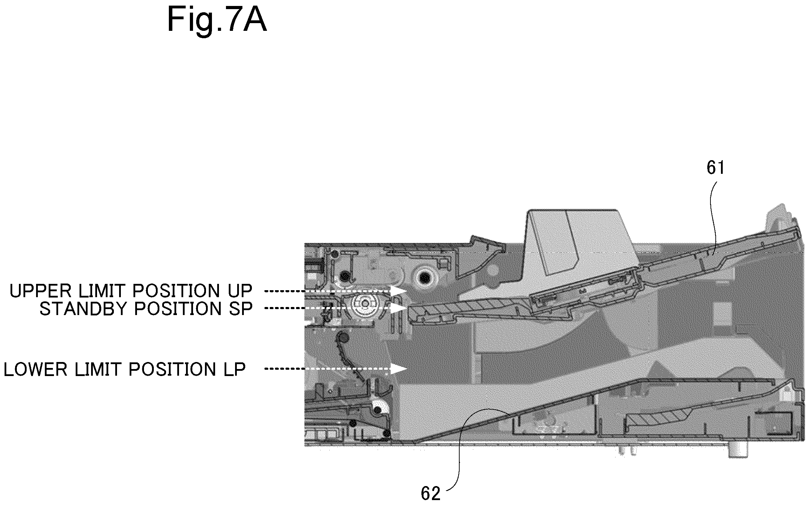

Next, the controller 100 allows the document loading tray 61 to move down to the standby position SP a predetermined distance PD lower than the upper limit position UP and stop at the standby position SP. The predetermined distance PD is sufficient to be a very small distance (for example, 5 mm) so long as it is a distance at which the sheets of original document can be kept away from the feed roller 41. The standby position SP is most preferably a position closer to the upper limit position UP than the lower limit position LP. FIG. 7A shows a state where the document loading tray 61 stands by at the standby position SP.

When accepting an instruction to read original document through the operation device 470, the controller 100 allows the document conveying mechanism 63 to convey a sheet of original document fed by the feed roller 41 to the reading position of the document reading device 5. In doing so, the controller 100 allows the elevating mechanism 64 to move up the document loading tray 61 to the upper limit position UP again.

The operation device 470 accepts a user's instruction, like an instruction to start scanning or copying sheets of original document loaded on the document loading tray 61, as an instruction to read original document.

A structure in which the document conveying device 6 includes the controller 100 as the controller and further includes the operation device 470 is an example of the document conveying device defined in CLAIMS.

When the controller 100 accepts through the operation device 470 the above instruction to read original document before the first waiting time T1 passes from when the document detection sensor 73 has detected the presence of any sheet of original document on the document loading tray 61, the controller 100 allows the elevating mechanism 64 to move up the document loading tray 61 to the upper limit position UP before the passage of the first waiting time T1.

When the presence of any sheet of original document on the document ejection tray 62 is undetected by the ejected document detection sensor 74 at the time the presence of any sheet of original document on the document loading tray 61 has gone undetected by the document detection sensor 73 (i.e., at the time all the sheets of original document have been cleared from the document loading tray 61), the controller 100 waits for the passage of a predetermined second waiting time T2 (for example, five seconds) from when the presence of any sheet of original document on the document ejection tray 62 has been undetected by the ejected document detection sensor 74, and, upon passage of the second waiting time T2, controls the drive of the elevating mechanism 64 to move down the document loading tray 61 to the lower limit position LP.

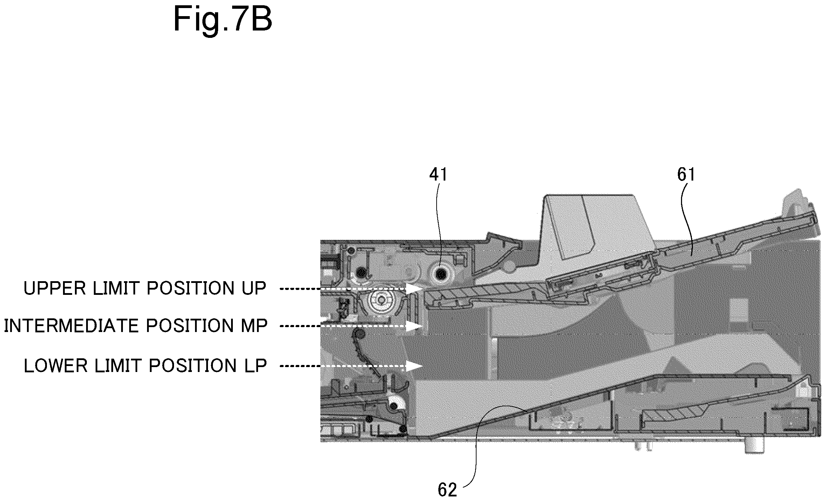

On the other hand, when the ejected document detection sensor 74 detects the presence of any sheet of original document on the document ejection tray 62 at the time the presence of any sheet of original document on the document loading tray 61 has gone undetected by the document detection sensor 73, the controller 100 waits for the passage of a predetermined third waiting time T3 (for example, five seconds) from when the presence of any sheet of original document on the document ejection tray 62 has been detected by the ejected document detection sensor 74 and, upon passage of the third waiting time T3, controls the drive of the elevating mechanism 64 to move the document loading tray 61 to a predetermined intermediate position MP located between the upper limit position UP and the lower limit position LP and stop it at the intermediate position MP. FIG. 7B is a view showing the intermediate position MP.

When the presence of any sheet of original document on the document ejection tray 62 goes undetected by the ejected document detection sensor 74 while the controller 100 allows the document loading tray 61 to be stopping at the intermediate position MP, the controller 100 waits for the passage of a predetermined fourth waiting time T4 (for example, five seconds) from when the presence of any sheet of original document on the document ejection tray 62 has gone undetected by the ejected document detection sensor 74, and, upon passage of the fourth waiting time T4, controls the drive of the elevating mechanism 64 to move down the document loading tray 61 to the lower limit position LP.

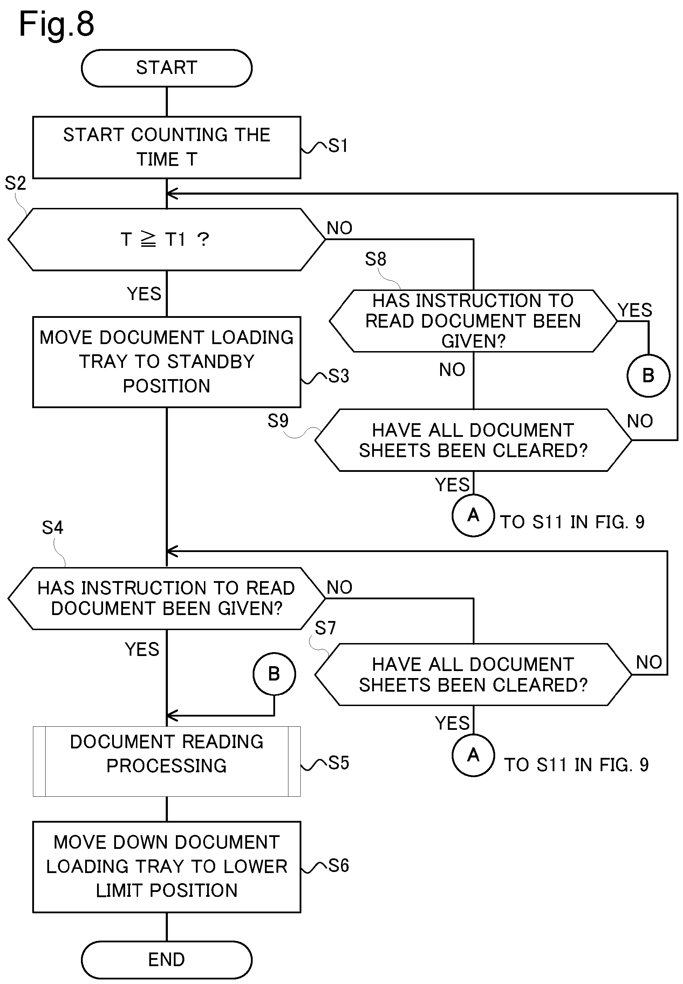

Next, a description will be given of an example of up-and-down movement control processing of the document loading tray 61 of the document conveying device 6 with reference to the flowchart shown in FIGS. 8 to 10. This up-and-down movement control processing is executed when the document detection sensor 73 detects the presence of any sheet of original document loaded on the document loading tray 61.

When the document detection sensor 73 detects the presence of any sheet of original document on the document loading tray 61, the controller 100 activates a timer built in the control device 10 to start counting the time (step S1) and determines whether or not the counted time T has reached the first waiting time T1 (step S2).

When determining that the counted time T has reached the first waiting time T1 (YES in step S2), the controller 100 controls the drive of the elevating mechanism 64 to move the document loading tray 61 to the standby position SP and stop it at the standby position SP (step S3).

Subsequently, the controller 100 determines whether or not it has accepted through the operation device 470 an instruction to read original document (for example, an instruction to scan it or an instruction to copy it) (step S4).

When the controller 100 determines that it has accepted an instruction to read original document (YES in step S4), the controller 100 executes document reading processing (step S5). In the document reading processing, the controller 100 controls the drive of the elevating mechanism 64 to move up the document loading tray 61 to the upper limit position UP, controls the drive of the document conveying mechanism 63 to start conveying the sheet of original document loaded on the document loading tray 61, and allows the document reading device 5 to read the image of the sheet of original document.

When the controller 100 determines, based on the contents of detection of the document detection sensor 73, that the conveyance of all the sheets of original document loaded on the document loading tray 61 has been completed, the controller 100 controls the drive of the elevating mechanism 64 to move down the document loading tray 61 to the lower limit position (step S6).

Specifically, the controller 100 allows the elevating mechanism 64 to continue to move down the document loading tray 61 until the lower limit sensor 68 (see FIG. 4) detects the document loading tray 61. After the processing in step S6, the controller 100 ends the up-and-down movement control processing.

On the other hand, when the controller 100 determines that it has not accepted an instruction to read original document (NO in step S4), the controller 100 determines, based on the contents of detection of the document detection sensor 73, whether or not the sheets of original document have been cleared from the document loading tray 61 (step S7).

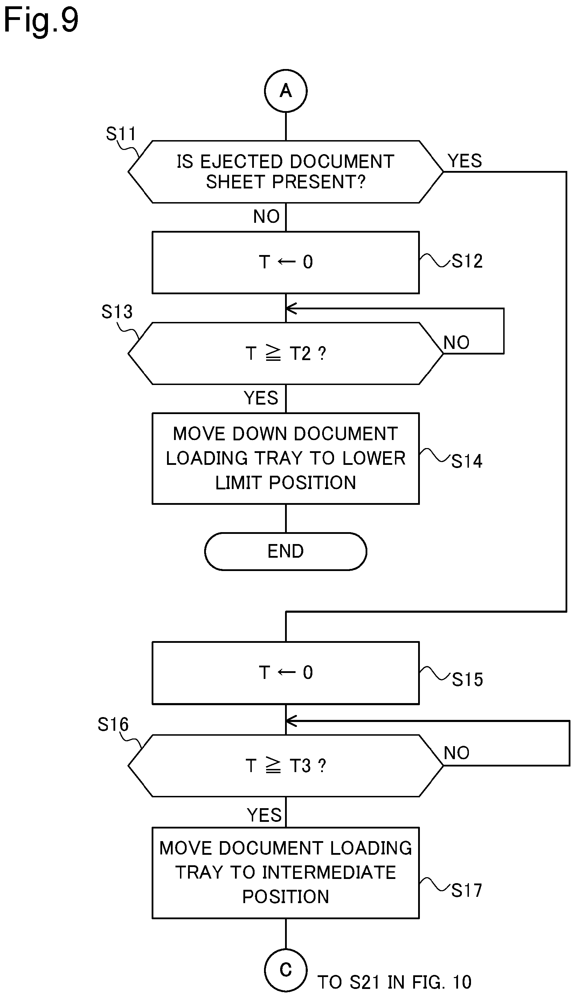

When determining that the sheets of original document have not been cleared from the document loading tray 61 and any sheet of original document has still been loaded on the document loading tray 61 (NO in step S7), the controller 100 goes back to the processing in step S4. On the other hand, when determining that the sheets of original document have been cleared from the document loading tray 61 (YES in step S7), the controller 100 goes to the processing in step S11 (see FIG. 9).

When determining that the counted time T has not reached the first waiting time T1 (NO in step S2), the controller 100 determines whether or not it has accepted through the operation device 470 an instruction to read original document (step S8).

When the controller 100 determines that it has accepted an instruction to read original document (YES in step S8), the controller 100 goes to the processing in step S5 and executes document reading processing. On the other hand, when the controller 100 determines that it has not accepted an instruction to read original document (NO in step S8), the controller 100 determines, based on the contents of detection of the document detection sensor 73, whether or not the sheets of original document have been cleared from the document loading tray 61 (step S9).

When determining that the sheets of original document have not been cleared from the document loading tray 61 and any sheet of original document has still been loaded on the document loading tray 61 (NO in step S9), the controller 100 goes back to the processing in step S2. On the other hand, when determining that the sheets of original document have been cleared from the document loading tray 61 (YES in step S9), the controller 100 goes to the processing in step S11 (see FIG. 9).

The flowchart shown in FIG. 9 shows processing to be executed when all the sheets of original document have been cleared from the document loading tray 61. Base on the contents of detection of the ejected document detection sensor 74, the controller 100 determines whether or not any sheet of original document is present on the document ejection tray 62 (step S11).

When determining that no sheet of original document is present on the document ejection tray 62 (NO in step S11), the controller 100 resets the counted time T to zero (step S12) and then determines whether or not the counted time T has reached the second waiting time T2 (step S13).

When determining that the counted time T has reached the second waiting time T2 (YES in step S13), the controller 100 controls the drive of the elevating mechanism 64 to move down the document loading tray 61 to the lower limit position LP (step S14). After the processing in step S14, the controller 100 ends the up-and-down movement control processing.

When any sheet of original document has been loaded on the document loading tray 61 before the counted time T reaches the second waiting time T2 and the document detection sensor 73 detects the loaded sheet of original document, the controller 100 ends the up-and-down movement control processing and newly starts the up-and-down movement control processing from step S1.

On the other hand, when determining that any sheet of original document is present on the document ejection tray 62 (YES in step S11), the controller 100 resets the counted time T to zero (step S15) and then determines whether or not the counted time T has reached the third waiting time T3 (step S16).

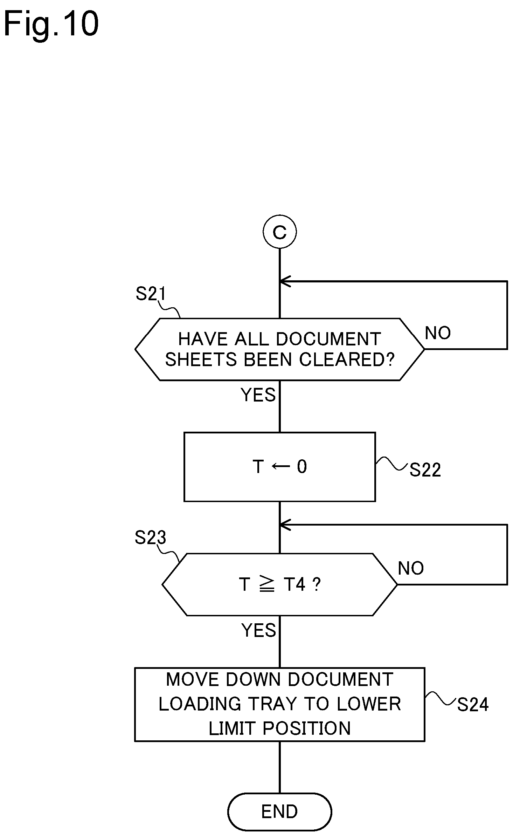

When determining that the counted time T has reached the third waiting time T3 (YES in step S16), the controller 100 controls the drive of the elevating mechanism 64 to move the document loading tray 61 to the intermediate position MP and stop it at the intermediate position MP (step S17), and goes to the processing in step S21 (see FIG. 10).

When any sheet of original document has been loaded on the document loading tray 61 before the counted time T reaches the third waiting time T3 and the document detection sensor 73 detects the loaded sheet of original document, the controller 100 ends the up-and-down movement control processing and newly starts the up-and-down movement control processing from step S1.

The flowchart shown in FIG. 10 shows processing to be executed when the document loading tray 61 stands by at the intermediate position MP. In the case where no sheet of original document is present on the document loading tray 61, but any sheet of original document is present on the document ejection tray 62, the document loading tray 61 stands by at the intermediate position MP.

Base on the contents of detection of the ejected document detection sensor 74, the controller 100 determines whether or not all sheets of original document have been cleared from the document ejection tray 62 (step S21).

When determining that all sheets of original document have been cleared from the document ejection tray 62 (YES in step S21), the controller 100 resets the counted time T to zero (step S22) and then determines whether or not the counted time T has reached the fourth waiting time T4 (step S23).

When determining that the counted time T has reached the fourth waiting time T4 (YES in step S23), the controller 100 controls the drive of the elevating mechanism 64 to move down the document loading tray 61 to the lower limit position LP (step S24). After the processing in step S24, the controller 100 ends the up-and-down movement control processing.

When any sheet of original document has been loaded on the document loading tray 61 before all sheets of original document have been cleared from the document ejection tray 62 or before the counted time T reaches the fourth waiting time T4 and the document detection sensor 73 has detected the loaded sheet of original document on the document loading tray 61, the controller 100 ends the up-and-down movement control processing and newly starts the up-and-down movement control processing from step S1.

In the general document conveying device described previously, immediately after the document detection sensor detects the presence of any sheet of original document on the document loading tray (i.e., the user places sheets of original document on the document loading tray), the document loading tray is moved up to the upper limit position.

However, when the document loading tray is moved up immediately after the user places sheets of original document on the document loading tray, the upwardly moving document loading tray contacts the user's hand and thus interferes with the user's work. In addition, the cursor is difficult to use to align the sheets of original document in the widthwise direction of the sheets, which deteriorates convenience.

Unlike the above general document conveying device, in the above embodiment, the document loading tray 61 is allowed to stand by at the standby position SP closer to the upper limit position UP than the lower limit position LP and, therefore, the time taken from a user's instruction to read original document to the start of reading of the original document can be reduced.

In addition, the upward movement of the document loading tray 61 is performed, not immediately after the user's loading of sheets of original document on the document loading tray 61, but after the passage of the first waiting time T1. As a result, the convenience of the user's work during reading of original document, for example, the work of loading sheets of original document and the work of aligning the sheets, can be ensured. Thus, while the convenience of the work during reading of original document can be ensured, the time from a user's instruction to read original document to the start of reading of the original document can be reduced.

Furthermore, the document loading tray 61 is allowed to stand by, not at the upper limit position UP where a sheet of original document is in contact with the feed roller 41, but at the standby position SP the predetermined distance PD lower than the upper limit position UP. As a result, a clearance is formed between the feed roller 41 and sheets of original document loaded on the document loading tray 61. Therefore, even when the document loading tray 61 stands by at the standby position SP, the insertion and removal of sheets of original document and the use of the cursor 22 can be easily made.

When the operation device 470 accepts an instruction to read original document before the first waiting time T1 passes, the elevating mechanism 64 is allowed to move up the document loading tray 61 to the upper limit position UP before the passage of the first waiting time T1. As a result, upon acceptance of a user's instruction to start scanning or copying original document, the document reading processing can be executed promptly. In addition, when all the sheets of original document are cleared from the document loading tray 61, the document loading tray 61 can be moved to a position suitable for the situation of the time.

The user may use the cursor 22 to align sheets of original document loaded on the document loading tray 61. It is not preferable that the document loading tray 61 moves while the user uses the cursor 22.

To cope with this, in another embodiment of the present invention, when the cursor movement detection sensor 75 detects movement of the cursor 22, the controller 100 keeps the document loading tray 61 from starting moving until a specified time passes from when the movement of the cursor 22 has gone undetected by the cursor movement detection sensor 75.

For example, when the cursor movement detection sensor 75 detects movement of the cursor 22, the controller 100 stops counting the time and resets the counted time T to zero. Then, when the movement of the cursor 22 goes undetected by the cursor movement detection sensor 75, the controller 100 starts counting the time.

The user may be able to set whether to enable or disable the function of setting the waiting time before the movement of the document loading tray 61, in a manner that the controller 100 sets it according to an instruction accepted by a user's operation on the operation device 470. Furthermore, the length of each of the waiting times may be able to be set by the user.

The present invention is not limited to the above embodiments and can be modified in various ways. For example, in the above embodiments, an example of the controller defined in CLAIMS is the controller 100 of the control device 10 of the image forming apparatus 1. However, it is possible to provide the document conveying device 6 with a conveyance controller which governs overall operation control of the document conveying device 6 and is formed of a CPU or the like and allow the conveyance controller to execute various processing of the controller 100 described with reference to FIGS. 8 to 10, thus allowing the conveyance controller to serve as an example of the controller defined in CLAIMS.

The structures, configurations, and processing of the embodiments described with reference to FIGS. 1 to 10 are merely illustrative and are not intended to limit the present invention to them.

## Claims

1. A document conveying device (6) comprising:
an operation device (470) that accepts a user's instruction input thereto;
a document loading tray (61) that receives sheets of original document loaded thereon;
a document detection sensor (73) that detects presence or absence of any sheet of original document on the document loading tray (61);
a document ejection tray (62);
a feed roller (41) that is provided above the document loading tray (61) and feeds the sheets of original document on the document loading tray (61) sheet by sheet;
a document conveying mechanism (63) that conveys the sheet of original document fed by the feed roller (41) to a reading position of a document reading device (5) and ejects the sheet of original document conveyed to the reading position to the document ejection tray (62);
an elevating mechanism (64) that moves up and down the document loading tray (61) between a predetermined lower limit position and an upper limit position at which a top surface of an uppermost one of the sheets of original document loaded on the document loading tray (61) presses against the feed roller (41); and
a control device (10) that includes a processor and functions as a controller (100) through the processor executing a control program,
wherein, upon passage of a predetermined first waiting time from when the document detection sensor (73) has detected the presence of any sheet of original document on the document loading tray (61), the controller (100) allows the elevating mechanism (64) to move the document loading tray (61) to a predetermined standby position located between the upper limit position and the lower limit position and stop the document loading tray (61) at the standby position, and
wherein, upon acceptance of an instruction to read the original document through the operation device (470), the controller (100) allows the feed roller (41) to feed the sheet of original document on the document loading tray (61), allows the document conveying mechanism (63) to convey the sheet of original document fed by the feed roller (41) to the reading position, and allows the elevating mechanism (64) to move up the document loading tray (61) to the upper limit position.

2. The document conveying device (6) according to claim 1, wherein when the controller (100) accepts through the operation device (470) the instruction to read the original document before the first waiting time passes from when the document detection sensor (73) has detected the presence of any sheet of original document on the document loading tray (61), the controller (100) allows the elevating mechanism (64) to move up the document loading tray (61) to the upper limit position before passage of the first waiting time.

3. The document conveying device (6) according to claim 1,
further comprising an ejected document detection sensor (74) that detects presence or absence of any sheet of original document on the document ejection tray (62),
wherein when the presence of any sheet of original document on the document ejection tray (62) is undetected by the ejected document detection sensor (74) at a time the presence of any sheet of original document on the document loading tray (61) has gone undetected by the document detection sensor (73), the controller (100) waits for passage of a predetermined second waiting time from when the presence of any sheet of original document on the document ejection tray (62) has been undetected by the ejected document detection sensor (74), and, upon passage of the second waiting time, controls drive of the elevating mechanism (64) to move down the document loading tray (61) to the lower limit position, and
wherein when the ejected document detection sensor (74) detects the presence of any sheet of original document on the document ejection tray (62) at the time the presence of any sheet of original document on the document loading tray (61) has gone undetected by the document detection sensor (73), the controller (100) waits for passage of a predetermined third waiting time from when the presence of any sheet of original document on the document ejection tray (62) has been detected, and, upon passage of the third waiting time, controls the drive of the elevating mechanism (64) to move down the document loading tray (61) to a predetermined intermediate position located between the upper limit position and the lower limit position and stop the document loading tray (61) at the intermediate position.

4. The document conveying device (6) according to claim 3, wherein when the presence of any sheet of original document on the document ejection tray (62) goes undetected by the ejected document detection sensor (74) while the controller (100) allows the document loading tray (61) to be stopping at the intermediate position, the controller (100) waits for passage of a predetermined fourth waiting time from when the presence of any sheet of original document on the document ejection tray (62) has gone undetected by the ejected document detection sensor (74), and, upon passage of the fourth waiting time, controls the drive of the elevating mechanism (64) to move down the document loading tray (61) to the lower limit position.

5. The document conveying device (6) according to claim 1, wherein
the document loading tray (61) comprises:
a document loading table (21) on which sheets of original document are to be loaded;
a cursor (22) provided on a top surface of the document loading table (21) and slidable in a direction of width of the sheet of original document orthogonal to a direction of conveyance of the sheet of original document;
a document width guide (23) that stands upright from the cursor (22) and restricts a widthwise position of the sheets of original document by abutting on the sheets of original document loaded on the document loading table (21) from the direction of width of the sheet of original document; and
a cursor movement detection sensor (75) that detects movement of the cursor (22), and
when the cursor movement detection sensor (75) detects movement of the cursor (22), the controller (100) keeps the document loading tray (61) from starting moving until a specified time passes from when the movement of the cursor (22) has gone undetected by the cursor movement detection sensor (75).

6. The document conveying device (6) according to claim 5, wherein when the cursor movement detection sensor (75) detects the movement of the cursor (22), the controller (100) stops counting the time, resets a counted time, and then starts counting the time at a time the movement of the cursor (22) goes undetected by the cursor movement detection sensor (75).

7. An image forming apparatus (1) comprising:
the document conveying device (6) according to any of claims 1 to 6;
a document reading device (5) that reads an image of a sheet of original document conveyed to a reading position; and
an image forming device (12) that forms the image on a recording medium.
